# EUROPÄISCHE PATENTSCHRIFT

(11) **EP 0 899 168 B1**
(45) Veröffentlichungstag und Bekanntmachung des Hinweises auf die Patenterteilung: **23.04.2003**
(21) Anmeldenummer: 98113489.3
(22) Anmeldetag: 20.07.1998
(51) Int. Cl.: B60R 21/02, F16F 7/12

(54) **Deformationsstruktur für den Insassenschutz in Fahrzeugen**
Deformation structure for the protection of occupants in vehicles
Structure déformable pour la protection des occupants de véhicules

(30) Priorität: 23.08.1997 DE 19736839
(43) Veröffentlichungstag der Anmeldung: 03.03.1999
(73) Patentinhaber: Volkswagen Aktiengesellschaft, 38436 Wolfsburg (DE)
(72) Erfinder: Siebels, Johann, Dipl.-Phys., 38444 Wolfsburg (DE); Schmidt, Knut, Dipl.-Ing., 38553 Wasbüttel (DE)

(56) Entgegenhaltungen:
- EP-A- 0 669 483
- EP-A- 0 718 157
- DE-A- 4 003 952
- DE-A- 4 332 166
- DE-A- 19 518 366
- DE-B- 2 249 556
- US-A- 4 786 540
- PATENT ABSTRACTS OF JAPAN vol. 1998, no. 01, 30. Januar 1998 (1998-01-30) & JP 09 240400 A (AISIN KEIKINZOKU KK;TOYOTA MOTOR CORP), 16. September 1997 (1997-09-16) & US 5 857 734 A (OKAMURA ET AL.) 12. Januar 1999 (1999-01-12)

## Beschreibung

Die Erfindung betrifft eine Deformationsstruktur in Fahrzeugen für den Insassenschutz, insbesondere für den direkten Insassenschutz im Bereich des Fahrgastraumes.

Aufgrund der ständig wachsenden Anforderungen an die Fahrzeugsicherheit werden für Polstermaßnahmen im Bereich des Fahrgastraumes Deformationsstrukturen, insbesondere Schäume und Waben, mit energieabsorbierenden Eigenschaften eingesetzt, die die Verletzungsgefahr bzw. die Schwere von Verletzungen bei einem Aufprall mindern sollen, indem sie bei Einhaltung einer maximal zulässigen Kraft so viel kinetische Energie wie möglich absorbieren und dadurch die Aufprallbelastungen senken.

Elastische Schaummaterialien absorbieren die Aufprallenergie bis zu einer bestimmten Grenze und geben diese dann in umgekehrter Richtung wieder ab, was zu unerwünscht hohen Rückprallgeschwindigkeiten führt.

Feste (Kunststoff-) Schaummaterialien absorbieren Aufprallenergie durch das und bei dem Zusammendrücken der Poren und Zellen in befriedigender Weise, jedoch nur bis zum vollständigen Zusammendrücken der Zellen und dem damit geschaffenen Zustand "festen Materials", der einen überproportionalen Kraftanstieg mit sich bringt und für eine weitere Energieabsorption nicht geeignet ist.

Für eine insassenschützende Energieabsorption ist eine Kraft-Verformungsweg-Kennlinie des Deformationselementes zu erreichen, bei der zu Beginn der Verformung und über einen möglichst langen Verformungsweg, der im wesentlichen der Dicke des unverformten Deformationselementes entspricht, eine bestimmte maximal zulässige Kraft nicht überschritten wird, damit die Funktion des Deformationselementes als enrgieabsorbierendes Bauteil erhalten bleibt und die eingeleitete Kraft nicht in voller Höhe auf den betreffenden Insassen übertragen wird. Um eine ausreichende Energieabsorption durch das Deformationselement sicherzustellen, darf am Anfang der Verformung ein überproportionaler Kraftanstieg, ein sog. Kraft-Peak, nicht auftreten, und die Verformung sollte über den gesamten Verformungsweg nahe, jedoch unterhalb der maximal zulässigen Kraft erfolgen.

Beiträge dazu versuchen Deformationselemente und -strukuren zu leisten, wie sie in den nachfolgenden Dokumenten beschrieben sind.

Die DE 25 24 633 A1 beschreibt eine Fahrzeugtür, mit einer als Formteil ausgebildeten energieabsorbierenden polsternden Verkleidung aus einem synthetischen, starren Kunststoffschaum mit mehreren nach der dem Insassenraum abgewandten Seite ausgebildeten angeformten Vorsprüngen, wie Rippen, Säulen oder Kegel, auf der insassenraumseitig eine Schicht aus einem kraftverteilenden halbsteifen Kunststoffschaum angeordnet ist.

Auch sind Deformationsstrukturen mit energieabsorbierenden keramischen Deformationselementen bekannt. So ist Gegenstand der DE 29 17 687 ein Deformationselement, das einen energieabsorbierenden Kem aus einer Schüttung aus mineralischen Partikelschäumen, insbesondere aus kugelförmigen Blähton-, Blähsilikat- oder Blähschieferpartikeln aufweist, dessen Zwischenvolumen von einem Schaumstoff ausgefüllt ist und der von einem elastischen Mantel umgeben ist. Aus der DE 43 40 346 A1 ist eine Deformationsstruktur bekannt, die aus in Kunststoffschaum eingebetteter Strukturkeramik oder Gerüstkeramik. d.h. einem Raumgebilde aus Kunststoffäden bzw. Kunststoffgittem, gebildet ist. Des weiteren beschreibt die DE 43 40 347 A1 einen Träger für Kraftfahrzeuge, der wenigstens teilweise mit einer Vielzahl an seiner Innenwandung anliegender keramischer Hohlkörper gefüllt ist und der sich bei einer Kraftbeaufschlagung in Richtung seiner Erstreckung (axial) unter gezielter Faltenbildung verformt. Durch die Auswahl der keramischen Hohlkörper ist es möglich, ein abgestimmtes Verformungsverhalten des Trägers zu erzeugen. Dabei ist der Einsatz größerer und/ oder dünnwandiger Hohlkörper mit einem größeren Verformungsweg verbunden, während kleinere und/ oder dickwandigere Hohlkörper ein höheres Kraftaufnahmevermögen aufweisen.

Ein aus keramischen Hohlkörpern unterschiedlichen Durchmessers und unterschiedlicher Wandstärke gebildetes Deformationselement beschreibt auch die DE 43 40 349 A1. Die Hohlkörper, vorzugsweise Aluminiumoxid-Hohlkugeln, sind so angeordnet, daß im Frontbereich (krafteinleitungsseitig) solche mit relativ großer Wandstärke, die ein größeres Energieaufnahmevermögen haben, und in Kraftrichtung dahinter solche mit großem Durchmesser bzw. einer geringen Wandstärke zur Erzielung eines größeren Weges bei niedrigerem Kraftniveau angeordnet sind.

Gegenstand der EP 0 530 042 B1 ist eine Fahrzeugtür mit einem Türkörper, in dem ein Stoßpolster angeordnet ist, das eine einstückige Verbundstruktur mit einer Anordnung von zueinander parallelen länglichen Schaumelementen darstellt, deren Achsen quer zur Türverkleidung angeordnet sind. Auch die DE 43 32 166 beschreibt eine Fahrzeugtür mit einem inneren und einem äußeren Karosserieblech und mit einer an dem inneren Karosserieblech angeordneten bienenwabenförmig gestalteten Deformationsstruktur, deren Zellen bildende Wände im wesentlichen quer zum inneren Karosserieblech ausgerichtet sind.

In der Darstellung des Standes der Technik in der PS 36 21 697 werden als energieabsorbierende Aufprallträger horizontal angeordnete Rohre oder Profilträger aus einem homogenen Werkstoff genannt. Zur Verbesserung des spezifischen Umformvermögens derartiger Rohre oder Profilträger wird in der Schrift vorgeschlagen, in diesen eine Verstärkung anzuordnen. Dabei weisen die Verstärkungselemente hohlraumbildende Elemente auf, die mit ihren Längsachsen senkrecht zum Zuggurt und zum Druckgurt angeordnet sind.

Schließlich ist in der DE 30 38 252 C2 ein stoßabsorbierendes Deformationsglied für den Knieaufprallbereich von Fahrer und Beifahrer beschrieben, das aus mehreren zueinander parallelen Rohren gebildet ist, deren Rohrachse quer zur Aufprallrichtung verläuft.

Den vorbeschriebenen Lösungen sind hinsichtlich der Erfüllung der eingangs erwähnten Kraft-Verformungsweg-Kennlinie mehr oder weniger Grenzen gesetzt. Insbesondere ist die Deformationsstruktur nach einem kurzen Verformungsweg verdichtet und verhält sich dann wie Vollmaterial, verbunden mit einem überproportionalen Kraftanstieg.

Es ist deshalb Aufgabe der Erfindung, eine Deformationsstruktur nach dem Oberbegriff des Anspruchs 1 zu schaffen, bei der mit einfachen Deformationselementen ein überproportionaler Kraftanstieg bei Beginn der Verformung und über einen möglichst langen Verformungsweg, der weitgehend der Dicke der Deformationsstruktur entsprechen sollte, vermieden wird, um die Verletzungsgefahr eines auf diese aufprallenden Fahrzeuginsassen zu verringern bzw. eine solche nicht zu erhöhen.

Diese Aufgabe wird bei einer gattungsgemäßen Deformationsstruktur nach DE 29 17 687 gemäß dem Oberbegriff des Anspruchs 1 durch dessen kennzeichnende Merkmale gelöst.

Die erfindungsgemäße Deformationsstruktur weist als Hohlkörper in radialer Richtung vorverformte Rohrabschnitte aus Metall auf, die mit der Rohrachse parallel zu den Wandungen oder anderen Bauteilen angeordnet sind, mit denen sie bei einem Aufprall in Wirkverbindung stehen. Dabei können die radial vorverformten Rohrabschnitte einzeln oder einzeln in vorbestimmten Anordnungen zueinander oder ein- oder mehrlagig zusammengefügt sein. Die Kraft-Verformungsweg-Kennlinie des einzelnen vorverformten Rohrabschnitts und der ein- und mehrlagig aus vorverformten Rohrabschnitten zusammengefügten Verbunde und auch die maximal zulässige Kraft, bis zu der die Deformationsstruktur Energie zu absorbieren vermag bzw. als solche funktioniert, ist dabei vorbestimmbar. Die Kennlinie des einzelnen Rohrabschnitts ist außer von der Vorverformung auch abhängig vom Material, der lichten Weite, der Wandstärke und-gemetrie und der Länge des Rohrabschnitts. Bei den Verbunden kommen als weitere Einflußfaktoren die Anzahl der verbundenen Rohrabschnitte, der Abstand und die Anordnung derselben und die Fügemethode hinzu. Es hat sich jedoch gezeigt, daß bei einem Vorverformungsgrad des einzelnen, in der Deformationsstruktur eingesetzten Rohrabschnitts im Bereich von o,1 bis 85 % ein Kraft-Peak zu Beginn der Verformung nicht auftritt, sofern eine vorbestimmte Maximalkraft bei der Energieeinleitung nicht überschritten wird. Bei einem Aufprall und einer in das Deformationselement eingeleiteten Verformungsenergie wird die Verformung der vorverformten Rohrabschnitte ohne das Auftreten eines überproportionalen Kraftanstiegs praktisch fortgesetzt, wobei der Verformungsweg lang ist und bei einzeln angeordneten Rohrabschnitten im wesentlichen der lichten Weite derselben entspricht. Bei ein- oder mehrlagig zusammengefügt angeordneten Rohrabschnitten ist der Verformungsweg etwas geringer als die Summe der lichten Weiten, da parallel zur Kraftwirkungsrichtung ausgerichtete Profilwände bei der Verformung gestaucht werden und sich zwischen die quer zur Kraftwirkungsrichtung angeordneten Profilwände schieben.

Durch die Vermeidung des "Kraft-Peaks" wird die Verletzungsgefahr eines auf die Deformationsstruktur aufprallenden Fahrzeuginsassen reduziert.

Die Rohrabschnitte können dabei aus Vierkantprofilen erzeugt sein, insbesondere aus quadratischen Profilen. Der Verformungsgrad sollte vorteilhafterweise 20 % betragen. Diese Rohrabschnitte können verschieden angeordnet werden, derart, daß die Kraft über eine Profilseite oder eine Profilecke eingeleitet wird, so daß bei gleichen Rohrabschnitts-Parametem unterschiedliche Kennlinien eingestellt werden können. Überdies kann der Eckenradius gezielt verändert werden.

Die Deformationsstrukturen können auch durch eine ein- oder mehrlagige Kombintion von Rohren unterschiedlicher lichter Weiten oder/ und unterschiedlicher Wandstärken aus gleichen oder unterschiedlichen Materialien gebildet sein.

Bei mehrlagig angeordneten Rohrabschnitten können die Lagen jeweils aus Rohrabschnitten mit Parametern zusammengefügt sein, die von denen der Rohrabschnitte der jeweils anderen Lage verschieden sind, um einen bestimmten Kraftverlauf über den Verformungsweg erzeugen. So kann es vorteilhaft sein, die jeweils krafteinleitungsseitige Lage aus Rohrabschnitten mit größerer Wandstärke als die in Kraftwirkungsrichtung hinter dieser angeordneten Lage oder die krafteinleitungsseitige Lage aus Rohrabschnitten mit kleinerer lichten Weite zu bilden.

Die Rohrabschnitte können zur Verbeserung der energieabsorbierenden Eigenschaften zusätzlich mit anderen energieabsorbierenden Strukturen kombiniert sein, beispielsweise können sie ausgeschäumt oder/ und in Schaum eingebettet sein.

Vorteilhaft ist es, wenn die ein- oder mehrlagigen Verbunde von Rohrabschnitten durch Verfahren gefügt sind, die die Eigenschaften des einzelnen Rohrabschnittes nicht verändern, beispielsweise durch Kleben.

Alternativ dazu können ein- oder mehrlagige Verbunde von Rohrabschnitten aus Abschnitten von einstückig gezogenen, stranggepreßten oder extrudierten Profilen erzeugt sein.

Die Erfindung wird nachstehend anhand von Ausführungsbeispielen erläutert. In der zugehörigen Zeichnung zeigen schematisch:
- Fig. 1:: eine erfindungsgemäße Deformationsstruktur aus einzelnen und im Abstand angeordneten, aus einem Vierkantprofil erzeugten Rohrabschnitten,
- Fig. 2:: eine weitere Deformationsstruktur, ebenfalls mit aus einem Vierkantprofil erzeugten Rohrabschnitten,
- Fig. 3:: eine dreilagige Deformationsstruktur,
- Fig. 4:: eine Deformationsstruktur aus einzelnen und im Abstand angeordneten, aus einem Vierkantprofil erzeugten Rohrabschnitten, kombiniert mit einem Schaum,
- Fig. 5:: die Anordnung von verschiedenen Deformationsstruktur als Türpolster in einem Tür-Längsschnitt,
- Fig. 6:: diese Anordnung im Querschnitt VI-VI und
- Fig. 7:: eine Eingangskraftniveau-Vorverformungsweg-Kennlinie bei Rechteckquerschnitten.

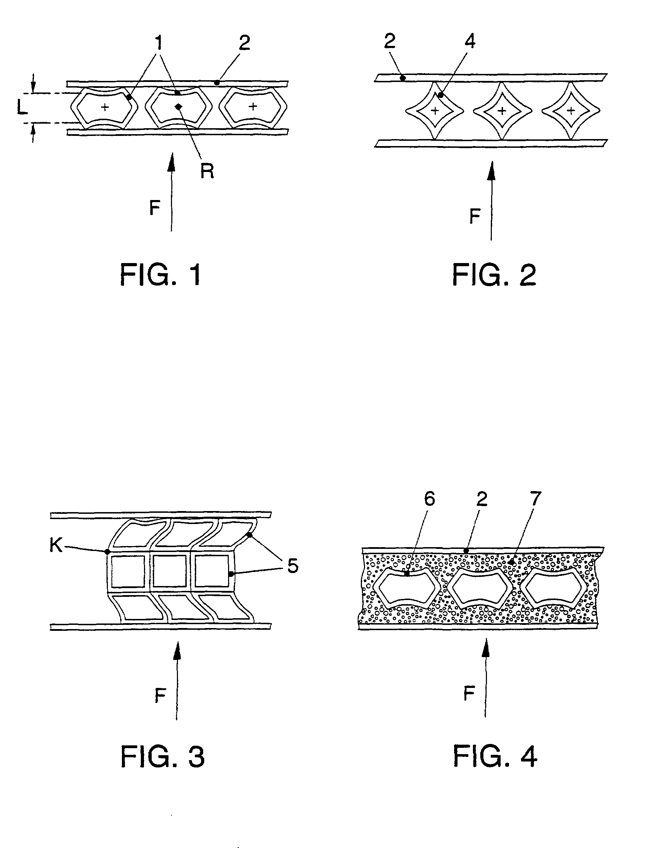

In Fig. 1 ist eine Deformationsstruktur dargestellt, die aus einzelnen, aus einem Vierkantprofil erzeugten und im Abstand voneinander angeordneten Stahl-Rohrabschnitten 1, die zwischen zwei Blechen 2 angeordnet sind, gebildet ist, wobei die Rohrachse R der Rohrabschnitte 1 jeweils parallel zu den Blechen 2 ausgerichtet ist. Die Rohrabschnitte 1 sind durch eine senkrecht durch ihre Längsachse vorgenommene Verformung mit einem Verformungsgrad von 35 % aus rechteckigen (quadratischen) Rohrabschnitten hergestellt worden. Bei in Pfeilrichtung eingeleiteter Aufprallenergie tritt ein überproportionaler Kraftanstieg, ein sog. Kraft-Peak, nicht auf, sondern die Rohrabschnitte 1 werden nach Erreichen eines durch deren Parameter bestimmten Kraftniveaus über den gesamten Verformungsweg, der etwa der inneren Seitenlänge L der Rohrabschnitte entspricht, im wesenltichen auf diesem Kraftniveau, das sogar eine leicht sinkende Tendenz hat, verformt. Erst am Ende des Verformungsweges, also wenn die der Seitenlänge entsprechende lichte Weite der Rohrabschnitte 1 gleich Null ist, steigt die Kraft steil an.

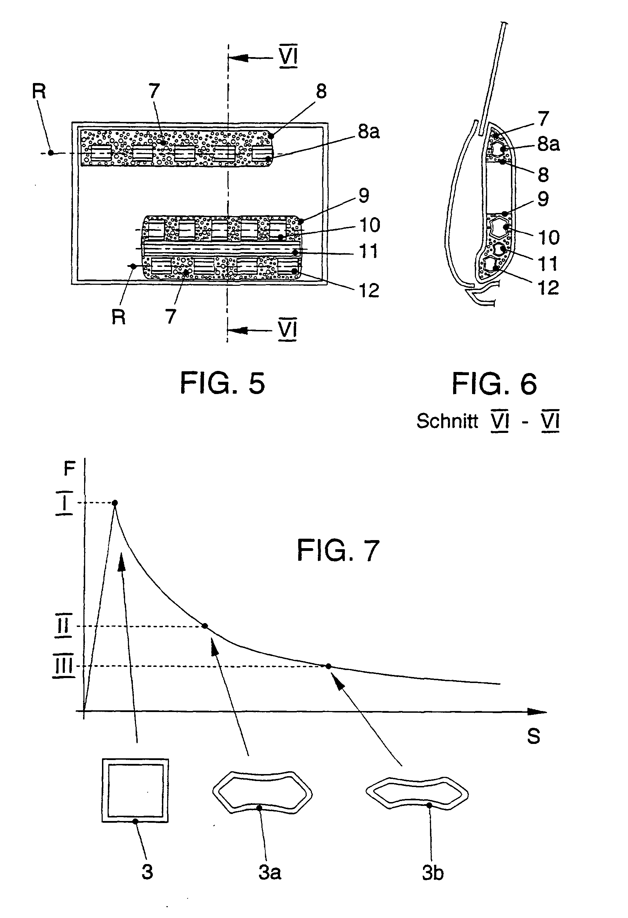

In Fig. 7 ist das Anfangskraftniveau, das ist das Kraftniveau, das bei Beginn der Verformung am Deformationselement auftritt, in Abhängigkeit von der Verformung an einem quadratischen Profil dargestellt. Während dieses Kraftniveau bei einem aus einem zylindrischen Rohrabschnitt geformten, d.h. vorverformten Quadratprofil 3 noch bei I liegt liegt, ist es bei dem fortgesetzt, d.h. stärker verformten Quadratprofil 3a auf II und bei dem noch stärker verformten Quadratprofil 3b auf III gesunken. Die Darstellung zeigt, wie das Kraftniveau, mit dem die Verformung eingeleitet wird, durch den Grad der Vorverformung verändert wird. Allerdings verringern sich im gezeigten Beispiel die verbleibenden Verformungswege mit dem Grad der Vorverformung.

Fig. 2 zeigt eine weitere Deformationsstruktur mit aus einem Vierkantprofil erzeugten Rohrabschnitten 4, bei denen die Krafteinleitungsrichtung bei der Verformung gegenüber den in Fig. 1 dargestellten Rohrabschnitten um 45° verdreht war. Bei dieser Deformationsstruktur weicht die Krafteinleitungsrichtung, bezogen auf die verformten Rohrabschnitte, um 45° ab, und es ergibt sich eine andere Kraft- Verformungsweg-Kennlinie.

Fig. 3 zeigt eine Deformationsstruktur mit dreilagig zusammengefügten Stahl-Rohrabschnitten 5, die vor ihrer Vorverformung untereinander gleich und in gleichem Maße vorverformt sind. Die Rohrabschnitte 5 sind miteinander verklebt (K).

In Fig. 4 ist eine aus einer Kombination von vorverformten Rohrabschnitten 6 und synthetischem festen Kunststoffschaum 7 gebildete Deformationsstruktur dargestellt. Der Kunststoffschaum 7 dient der Verteilung der in diese Struktur eingeleiteten Energie und der Verringerung des Eingangskraftniveaus. Vorteilhaft bei dieser Deformationsstruktur ist auch, daß diese als Deformationsbauteil vorgefertigt werden kann.

In den Fig. 5 und 6 ist eine Fahrzeugtür mit in dieser angeordneten Deformationsbauteilen 8 und 9 gezeigt. Diese besitzen eine unterschiedliche Deformationsstruktur. Während das obere Deformationsbauteil 8 aus einer Reihe in Rohrachsrichtung R im Abstand angeordneter und in Kunststoffschaum (7) eingebetteter vorverformter Rohrabschnitte 8a gebildet ist, hat das untere eine Struktur, bei der drei Lagen von vorverformten Rohrabschnitten 10; 11; 12 übereinander angeordnet und in Kunststoffschaum (7) eingebettet sind. Die obere Lage ist aus einzelnen, im Abstand voneinander angeordneten Rohrabschnitten 10, die mittlere Lage aus einem durchgehenden Rohrabschnitt 11 und die untere Lage wiederum aus im Abstand angeordneten Rohrabschnitten 12 gebildet. Die Profilquerschnitte sind von Lage zu Lage unterschiedlich. Die Struktur ist relativ aufwendig, zeigt jedoch die Vielfalt der Kombinationsmöglichkeiten und damit die Universalität der erfindungsgemäßen Deformationsstruktur.

## Patentansprüche

1. Deformationsstruktur für den Insassenschutz in Fahrzeugen mit zwischen Wandungen oder anderen Bauteilen angeordneten und Hohlkörper aufweisenden energieabsorbierenden Elementen, **dadurch gekennzeichnet, daß** die Hohlkörper senkrecht zu ihrer Längsachse vorverformte Rohrabschnitte (1; 3; 4; 5; 6; 8a; 9; 12) sind, die mit der Rohrachse (R) parallel zu den Wandungen einzeln in vorbestimmbarer Anordnung oder ein- oder mehrlagig zusammengefügt angeordnet sind, und daß der Verformungsgrad zwischen 0,1 % und 85 % liegt, bezogen auf die lichte Weite des unverformten Rohres in Richtung der Verformungskraft.

2. Deformationsstruktur nach Anspruch 1, **dadurch gekennzeichnet, daß** die Rohrabschnitte (1; 3; 4; 5; 6; 8a; 9; 12) aus Vierkantprofilen erzeugt sind.

3. Deformationsstruktur nach Anspruch 1 oder 2, **dadurch gekennzeichnet, daß** der Verformungsgrad der Rohrabschnitte (1; 3; 4; 5; 6; 8a; 9; 12) vorzugsweise größer/gleich 20 % beträgt.

4. Deformationsstruktur nach Anspruch 1, **dadurch gekennzeichnet, daß** diese durch eine ein- oder mehrlagige Kombination von vorverformten Rohrabschnitten (1; 3; 4; 5; 6; 8a; 9; 12) unterschiedlicher lichter Weiten oder/ und unterschiedlicher Wandstärken aus gleichen oder unterschiedlichen Materialien gebildet ist.

5. Deformationsstruktur nach Anspruch 1 oder 4, **dadurch gekennzeichnet, daß** bei mehrlagig zusammengefügten vorverformten Rohrabschnitten (5) die jeweils krafteinleitungsseitige Lage aus vorverformten Rohrabschnitten mit größerer Wandstärke gebildet ist als die in Kraftwirkungsrichtung hinter dieser angeordnete Lage.

6. Deformationsstruktur nach Anspruch 1 oder 4, **dadurch gekennzeichnet, daß** bei mehrlagig zusammengefügten vorverformten Rohrabschnitten (5) die jeweils krafteinleitungsseitige Lage aus Rohrabschnitten mit einer kleineren lichten Weite gebildet ist als die in Kraftwirkungsrichtung hinter dieser angeordneten Lage.

7. Deformationsstruktur nach einem der vorhergehenden Ansprüche, **dadurch gekennzeichnet, daß** die Rohrabschnitte (6; 8a; 10, 11, 12) mit anderen energieabsorbierenden Strukturen (7) kombiniert sind.

8. Deformationsstruktur nach Anspruch 1 oder einem der Ansprüche 4 bis 7, **dadurch gekennzeichnet, daß** ein- oder mehrlagige Verbunde von vorverformten Rohrabschnitten (5) durch ein die Verformungseigenschaften der Rohrabschnitte (5) unbeeinträchtigt lassendes Fügeverfahren miteinander verbunden sind.

9. Deformationsstruktur nach Anspruch 8, **dadurch gekennzeichnet, daß** das Fügen der Rohrabschnitte (5) durch Kleben erfolgt ist.

10. Deformationsstruktur nach Anspruch 1 oder einem der Ansprüche 1 bis 7, **dadurch gekennzeichnet, daß** ein- oder mehrlagige Verbunde von vorverformten Rohrabschnitten (5) aus Abschnitten von einstückig gezogenen, stranggepreßten oder extrudierten Profilen erzeugt sind.

## Claims

1. Deformable structure for occupant protection in vehicles, having energy-absorbing elements which are disposed between walls or other components and which have hollow bodies, **characterized in that** the hollow bodies are tube portions (1; 3; 4; 5; 6; 8a; 9; 12) which are predeformed perpendicular to their longitudinal axis and which are disposed with the tube axis (R) parallel to the walls individually in a predeterminable arrangement or joined together in single-layer or multilayer fashion, and **in that** the degree of deformation is between 0.1% and 85%, related to the clear width of the undeformed tube in the direction of the deformation force.

2. Deformable structure according to Claim 1, **characterized in that** the tube portions (1; 3; 4; 5; 6; 8a; 9; 12) are produced from quadrilateral profiles.

3. Deformable structure according to Claim 1 or 2, **characterized in that** the degree of deformation of the tube portions (1; 3; 4; 5; 6; 8a; 9; 12) is preferably greater than/equal to 20%.

4. Deformable structure according to Claim 1, **characterized in that** the same is formed by a single-layer or multilayer combination of preformed tube portions (1; 3; 4; 5; 6; 8a; 9; 12) of differing clear widths or/and differing wall thicknesses of the same or different materials.

5. Deformable structure according to Claim 1 or 4, **characterized in that** in the case of preformed tube portions (5) which are joined together in multilayer fashion the layer which is situated in each instance on the force introduction side is formed from preformed tube portions having a greater wall thickness than the layer disposed behind that layer in the direction of action of the force.

6. Deformable structure according to Claim 1 or 4, **characterized in that** in the case of preformed tube portions (5) which are joined together in multilayer fashion the layer which is situated in each instance on the force introduction side is formed from tube portions having a smaller clear width than the layer disposed behind that layer in the direction of action of the force.

7. Deformable structure according to one of the preceding claims, **characterized in that** the tube portions (6;; 8a; 10, 11, 12) are combined with other energy-absorbing structures (7).

8. Deformable structure according to Claim 1 or one of Claims 4 to 7, **characterized in that** single-layer or multilayer composites of preformed tube portions (5) are connected to one another by a joining process which leaves unimpaired the deformation properties of the tube portions (5).

9. Deformable structure according to Claim 8, **characterized in that** the joining of the tube portions (5) has taken place by adhesive bonding.

10. Deformable structure according to Claim 1 or one of Claims 1 to 7, **characterized in that** single-layer or multilayer composites of preformed tube portions (5) are produced from portions of integrally drawn, extrusion-moulded or extruded profiles.

## Revendications

1. Structure déformable pour la protection des occupants de véhicules avec des éléments d'absorption d'énergie disposés entre des parois ou d'autres composants et présentant des corps creux, **caractérisée en ce que** les corps creux sont des portions de tubes (1; 3; 4; 5; 6; 8a; 9; 12) prédéformées perpendiculairement à leur axe longitudinal, qui sont disposées avec l'axe du tube (R) parallèle aux parois de façon individuelle en une disposition prédéterminée ou rassemblées en une ou plusieurs couches, et **en ce que** le degré de déformation est situé entre 0,1 % et 85 %, rapporté à la largeur libre du tube non déformé dans la direction de la force de déformation.

2. Structure déformable suivant la revendication 1, **caractérisée en ce que** les portions de tubes (1; 3; 4; 5; 6; 8a; 9; 12) sont produites à partir de profilés carrés.

3. Structure déformable suivant la revendication 1 ou 2, **caractérisée en ce que** le degré de déformation des portions de tubes (1; 3; 4; 5; 6; 8a; 9; 12) est de préférence supérieur ou égal à 20 %.

4. Structure déformable suivant la revendication 1, **caractérisée en ce que** celle-ci est formée par une combinaison en une ou plusieurs couches de portions de tubes prédéformées (1; 3; 4; 5; 6; 8a; 9; 12) de largeurs libres différentes et/ou d'épaisseurs de paroi différentes, en des matières identiques ou différentes.

5. Structure déformable suivant la revendication 1 ou 4, **caractérisée en ce que**, dans le cas de portions de tubes prédéformées (5) rassemblées en plusieurs couches, chaque couche exposée directement à l'application des forces est formée de portions de tubes prédéformées ayant une plus grande épaisseur de paroi que la couche disposée derrière celle-ci dans le sens de l'application des forces.

6. Structure déformable suivant la revendication 1 ou 4, **caractérisée en ce que**, dans le cas de portions de tubes prédéformées (5) rassemblées en plusieurs couches, chaque couche exposée directement à l'application des forces est formée de portions de tubes ayant une plus petite largeur libre que la couche disposée derrière celle-ci dans le sens de l'application des forces.

7. Structure déformable suivant l'une quelconque des revendications précédentes, **caractérisée en ce que** les portions de tubes (6; 8a; 10, 11, 12) sont combinées avec d'autres structures d'absorption d'énergie (7).

8. Structure déformable suivant la revendication 1 ou l'une quelconque des revendications 4 à 7, **caractérisée en ce que** des groupes de portions de tubes prédéformées (5) en une ou plusieurs couches sont assemblés les uns aux autres par un procédé d'assemblage laissant intactes les propriétés de déformation des portions de tubes (5).

9. Structure déformable suivant la revendication 8, **caractérisée en ce que** l'assemblage des portions de tubes (5) est effectué par collage.

10. Structure déformable suivant la revendication 1 ou l'une quelconque des revendications 1 à 7, **caractérisée en ce que** des groupes de portions de tubes prédéformées (5) en une ou plusieurs couches sont produits à partir de portions de profilés étirés, filés à la presse ou extrudés en une seule pièce.
